# EUROPEAN PATENT APPLICATION

(11) **EP 2 700 884 A1**
(43) Date of publication of application: **26.02.2014**
(21) Application number: 13178295.5
(22) Date of filing: 29.07.2013
(51) Int. Cl.: F24F 5/00, F24F 13/068

(54) **Heat storage type radiation air conditioning system employing heat pump air-conditioner**

(30) Priority: 22.08.2012 JP 2012182845
(71) Applicant: Intercentral Co., Ltd., Takizawa Iwate (JP)
(72) Inventor: Nishino, Toru, Tokyo, Tokyo 2-8-14-706 (JP)
(74) Representative: Held, Stephan

(57) **Abstract**

A container material sealing and containing a latent heat storage material is arranged in a ceiling blow chamber box. Then, an air conditioning system of radiation type in which the metal panel is cooled or warmed by using as an auxiliary heat source the latent heat storage material having been cooled or warmed by heat storage achieved by cooling or warming the latent heat storage material with cool air or warm air generated by a heat pump air-conditioner and then coolness or warmth is radiated from the metal panel into a room and an air conditioning system of convection type in which cool air or warm air generated by the heat pump air-conditioner is blown into the room are provided and then the two air conditioning systems are used simultaneously or alternatively any one alone of the air conditioning systems is used so that air conditioning of the room is performed.

## Description

### BACKGROUND OF THE INVENTION

### 1. Field of the Invention

The present invention relates to a heat storage type radiation air conditioning system employing a heat pump air-conditioner, wherein a container material sealing and containing a latent heat storage material is arranged in a ceiling blow chamber box installed in the ceiling lower face, and wherein an air conditioning system of air convection type in which the cool air or warm air generated by the heat pump air-conditioner is blown into the chamber box so that air is blown into a room through a large number of air flow holes punched in a metal panel in the chamber box lower face and an air conditioning system of radiation type in which heat storage is achieved by cooling or warming the latent heat storage material with the cool air or the warm air generated by the heat pump air-conditioner so that the metal panel is cooled or warmed by using as an auxiliary heat source the latent heat storage material having been cooled or warmed and then coolness or warmth is radiated from the metal panel into the room are provided and then the two air conditioning systems simultaneously or alternatively any one alone of the air conditioning systems is used so that air conditioning is effectively achieved in the room.

### 2. Description of the Prior Art

Air conditioning systems of air convection type employing a heat pump air-conditioner which are in practical use in the prior art are effective in rapid air conditioning. Nevertheless, the lowest blow temperature at cooling is approximately 10 °C and the highest blow temperature at heating is approximately 40°C. That is, the blow temperature has an extremely large temperature difference form the room and hence causes discomfort to the residents. Further, in winter, heating operation need be temporarily stopped for defrosting and this causes discomfort to the residents.

Then, as an air conditioning system in which problems in the air conditioning systems of air convection type employing a heat pump air-conditioner used in practice in the prior art are resolved, an air conditioning method is proposed in Japanese Laid-open Patent Publication No. 1994-174261 (referred to as the "prior patent document").

In the air conditioning system described in the prior patent document, air from an air-conditioner is circulated in a cavity part behind the ceiling or inside the wall so that heating and cooling by radiation is achieved. Further, a part of the air is supplied to the room so that rapid heating and cooling by convection and improvement in thermal efficiency are achieved. Further, dry air obtained by dehumidification by the air-conditioner is supplied into the room and then the air is recirculated to the air-conditioner. This permits easy control of the room humidity and hence provides an operation and effect of avoiding dew condensation in the ceiling surface and the like.

Nevertheless, in the air conditioning system described in the prior patent document, it is described that air is blown into the cavity part behind the ceiling by the air-conditioner and then conditioned air is blown into the room from the cavity part behind the ceiling and that the ceiling surface is constructed from a member having a satisfactory thermal conductance. Nevertheless, even if this member is of a metal panel, the metal panel does not have a heat storage property. Thus, the blow temperature becomes excessively low at cooling and excessively high at heating, and hence discomfort to the residents remains. Further, operation of the air-conditioner need be continued in order to keep the metal panel cooled or warmed. This causes a problem of increase in power usage and electricity charges.

### SUMMARY OF THE INVENTION

The present invention has been devised in order to resolve the above-mentioned problem and provides a heat storage type radiation air conditioning system wherein one or a plurality of ceiling blow chamber boxes that are connected through a duct to an indoor unit installed in a room and linked to an outdoor unit of a heat pump air-conditioner through refrigerant piping and that are installed in the ceiling lower face, is constructed such that a cover plate is fixed to and covers an upper opening part thereof and such that a metal panel provided with a large number of air flow holes punched and used for blow of cool or warm air and radiation of coolness or warmth is fixed to a lower opening part thereof, wherein a container material sealing and containing a latent heat storage material is installed inside the chamber box, and wherein the system includes: an air conditioning system of air convection type in which cool air or warm air generated by the outdoor unit is blown into the chamber box and then the cool air or the warm air having been blown into the chamber box is blown into the room through the metal panel; and an air conditioning system of radiation type in which the metal panel is cooled or warmed by using as an auxiliary heat source the latent heat storage material having been cooled or warmed by heat storage achieved by cooling or warming the latent heat storage material with the cool air or the warm air from the outdoor unit and then coolness or warmth is radiated from the metal panel into the room.

A first object of the present invention is to provide a heat storage type radiation air conditioning system including: an air conditioning system of air convection type in which cool air or warm air having been blown into a chamber is blown into a room through a large number of air flow holes punched in a metal panel; and an air conditioning system of radiation type in which heat storage is achieved by cooling or warming a latent heat storage member with cool air or warm air generated by an outdoor unit so that, by using the latent heat storage material as an auxiliary heat source, the metal panel is cooled or warmed into a somewhat higher temperature when the temperature of the cool air or the warm air is remarkably low and, in contrast, into a somewhat lower temperature when the temperature is remarkably high and then coolness or warmth from the metal panel is radiated into the room, wherein the two air conditioning systems are allowed to be used simultaneously.

A second object of the present invention is to provide a heat storage type radiation air conditioning system in which any one alone of the air conditioning system of air convection type and the air conditioning system of radiation type is used so that air conditioning is achieved effectively in a room.

A third object of the present invention is to provide a heat storage type radiation air conditioning system which can be used as an air conditioning system of air convection type and alternatively can be used as an air conditioning system of radiation type and in which the two systems can be used even simultaneously so that the two air conditioning systems are appropriately used selectively depending on the season or the time of day so as to reduce power usage and electricity charges.

A fourth object of the present invention is to provide a heat storage type radiation air conditioning system in which a latent heat storage material is used as an auxiliary heat source so that the temperature difference at the time of air conditioning is reduced between the room temperature and the lowest blow temperature at cooling or the highest blow temperature at heating and hence discomfort to the residents is reduced.

The above-mentioned and other objects and novel features of the present invention will become more complete when the following detailed description is read with reference to the accompanying drawings. However, the drawings are merely illustrative and do not limit the scope of the present invention.

### BRIEF DESCRIPTION OF THE DRAWINGS

FIG. 1 is an overall outline vertical sectional view showing a heat storage type radiation air conditioning system employing a heat pump air-conditioner according to the present invention.

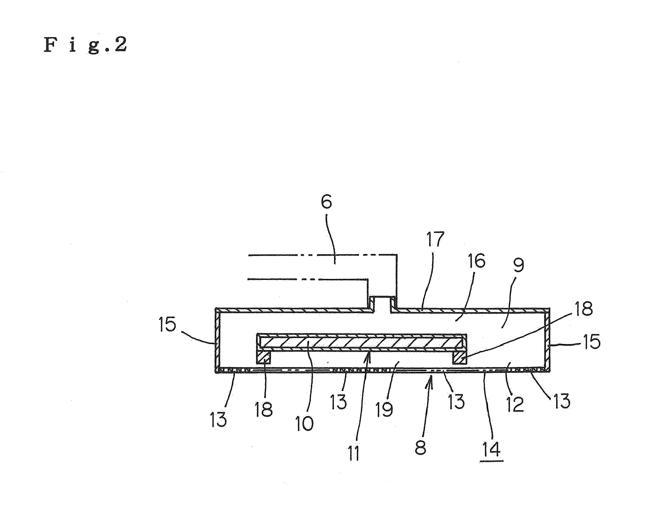

FIG. 2 is an enlarged vertical sectional view showing a main part of a heat storage type radiation air conditioning system employing a heat pump air-conditioner according to the present invention.

### DETAILED EXPLANATION OF THE INVENTION

The present invention is a heat storage type radiation air conditioning system employing a heat pump air-conditioner, wherein a container material 11 sealing and containing a latent heat storage material 10 is arranged in a chamber 9 of a ceiling blow chamber box 8 that is connected through a duct 6 to an indoor unit 5 installed in a room 4 and linked to an outdoor unit 2 of a heat pump air-conditioner 1 through refrigerant piping 3 and that is installed in a lower face of a ceiling 7, wherein a metal panel 14 in which a large number of air flow holes 13 are punched is fixed to a lower opening part 12 of the chamber box 8 serving as a blow side into the room 4, and wherein an air conditioning system of air convection type in which cool air or warm air generated by the outdoor unit 2 of the heat pump air-conditioner 1 is blown through an indoor unit 5 into the chamber 9 and then the cool air or the warm air having been blown into the chamber 9 is blown into the room 4 through the metal panel 14 and an air conditioning system of radiation type in which heat storage is achieved by cooling or warming the latent heat storage material 10 with the cool air or the warm air generated by the outdoor unit 2 so that, by using the latent heat storage material 10 as an auxiliary heat source, the metal panel 14 is cooled or warmed into a somewhat higher temperature when the temperature of the cool air or the warm air is remarkably low and, in contrast, into a somewhat lower temperature when the temperature is remarkably high and then coolness or warmth from the metal panel 14 is radiated into the room 4 are provided and then the two air conditioning systems are used simultaneously or alternatively any one alone of the air conditioning systems is used so that air conditioning is effectively achieved in the room 4.

The heat pump air-conditioner 1 employed in the present invention may be, basically, a heat pump air-conditioner widely used and well known in the prior art. The ceiling blow chamber box 8 that is connected through the duct 6 to the indoor unit 5 installed in the room 4 and linked to the outdoor unit 2 of the heat pump air-conditioner 1 through the refrigerant piping 3 and that is installed in the lower face of the ceiling 7 is constructed such that: the metal panel 14 in which the large number of air flow holes 13 are punched is fixed to in the lower opening part 12 of a sidewall plate 15 formed in a square frame shape by using a metal plate such as aluminum; a cover plate 17 fabricated from a metal plate such as aluminum is fixed to and covers an upper opening part 16 of the chamber box 8; and the chamber 9 is arranged in the inside.

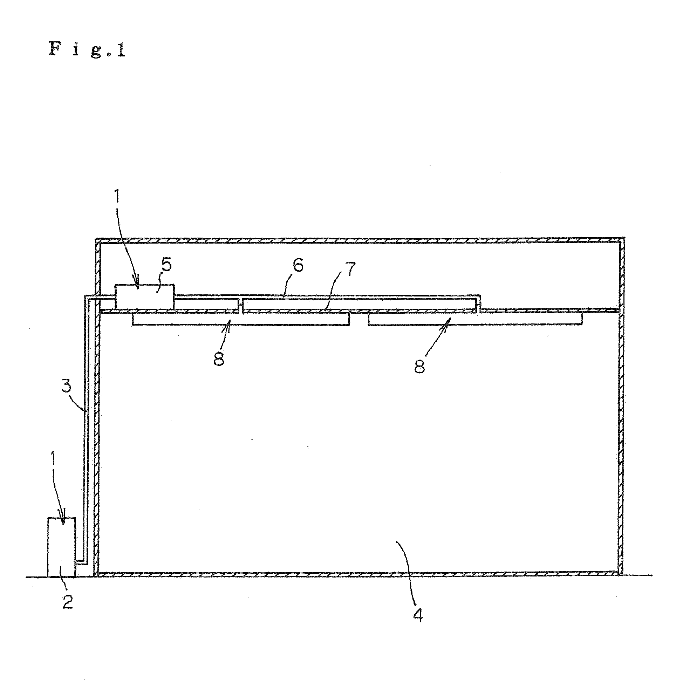

Here, two chamber boxes 8 are installed FIG. 1. However, one, three, or more chamber boxes 8 may be installed depending on the size of the room 4.

Then, two holding rods 18 are fixed at intervals between the two sidewall plates 15 arranged opposite to each other. Further, the container material 11 sealing and containing the latent heat storage material 10 is arranged and fixed on the center part of the two holding rods 18 with a gap 19 without contact with the metal panel 14. Further, a tip part of the duct 6 in fluid communication with the indoor unit 5 is formed in an opened shape in fluid communication in the center of the cover plate 17. Here, the method of fixing to the two holding rods 18 the container material 11 sealing and containing the latent heat storage material 10 need not be limited to particular one. For example, fixing may be achieved by using adhesives.

The latent heat storage material 10 employed in the present invention is composed of a compound whose phase transition is achievable and which has a latent heat storage property. Preferable compounds whose phase transition is achievable and which has a latent heat storage property include: polyethylene glycol (chemical formula HO-(CH₂-CH₂-O)ₙ-H, phase change temperature 30°C to 50°C, latent heat approximately 40 Cal/g) and paraffins (chemical formula C₁₈H₃₈, phase change temperature 28.2°C, latent heat 57.8 Cal/g; chemical formula C₂₀H₄₂, phase change temperature 36.4°C, latent heat 58.8 Cal/g; and the like). Then, it is recommended that polyethylene glycol is employed as the latent heat storage material 10, although the present invention is not limited to this.

Then, the raw material for the container material 11 containing the latent heat storage material 10 may be a bag-shaped material fabricated from an aluminum sheet, film, or the like which is excellent in heat resistance, shock resistance, coldresistance, water permeability resistance, and the like and is employed for retort food. Inaddition, preferably employable resins include polyethylene resin, polyethylene terephthalate (PET) resin, polyvinyl chloride, and nylon which are excellent in heat resistance, shock resistance, cold resistance, water permeability resistance, and the like. Then, a thin-box shaped material formed from a thin aluminum plate or polyethylene resin is preferable in the present invention.

Further, one or a plurality of the chamber boxes 8 may be installed in the lower face of the ceiling 7. When a plurality of the chamber boxes 8 are installed, the indoor units 5 may be installed in a number equal to the number of chamber boxes 8. Alternatively, one indoor unit 5 alone may be employed and then the one indoor unit 5 and a plurality of chamber boxes 8 may be linked through the duct 6. Further, in the chamber 9 of the chamber box 8, in order that cool air or warm air blown from the heat pump air-conditioner 1 should form a turbulent flow in the chamber 9 and that a larger amount of air in the chamber 9 should be in contact with the container material 11 containing the latent heat storage member 10, it is preferable that the volume of the chamber 9 is 5 to 10 or the like times the volume of the container material 11. Further, although not illustrated, it is preferable that a heat insulation sheet is stuck or a heat insulation coating is applied onto the inner peripheral surfaces or the outer peripheral surfaces of the sidewall plate 15 and the cover plate 17 constituting the chamber box 8 so that an insulation property is imparted to the chamber 9.

The operation of the present invention having the above-mentioned configuration is described below. In a case that the room 4 is to be cooled by using the two systems consisting of the air cooling system of air convection type and the air cooling system of radiation type in the heat storage type radiation air conditioning system employing the heat pump air-conditioner 1 according to the present invention, according to a test performed by the present inventor, when air at a blow temperature of the minimum value of 10°C is blown from the heat pump air-conditioner 1 to the latent heat storage material 10 serving as an auxiliary heat source, the temperature of the latent heat storage material 10 goes up to 15°C or the like by virtue of the heat absorbing action of the latent heat storage material 10. Further, the metal panel 14 is warmed into a surface temperature of even 20°C at minimum and the blow temperature into the room 4 through the metal panel 14 becomes 15°C at minimum. Thus, it has been confirmed that the blow temperature is controllable into values comfortable to the residents.

Further, in a case that the room 4 is to be cooled by using the two systems consisting of the air heating system of air convection type and the air heating system of radiation type in the heat storage type radiation air conditioning system employing the heat pump air-conditioner 1 according to the present invention, according to a test performed by the present inventor, when air at a blow temperature of the maximum value of 40°C is blown from the heat pump air-conditioner 1 to the latent heat storage material 10 serving as an auxiliary heat source, the temperature of the latent heat storage material 10 goes up to 30°C or the like by virtue of the heat absorbing action of the latent heat storage material 10. Further, the metal panel 14 is warmed into a surface temperature of even 35°C at maximum and the blow temperature into the room 4 through the metal panel 14 becomes 30°C at maximum. Thus, it has been confirmed that the temperature environment is controllable into comfortable one to the residents.

That is, when the latent heat storage material 10 is used as an auxiliary heat source, the temperature difference at the time of air conditioning is reduced between the room temperature and the lowest blow temperature at cooling or the highest blow temperature at heating. This provides an air conditioning system avoiding discomfort that could be caused to the residents.

Further, the latent heat storage material 10 performs heat radiation on demand in summer or at the time of defrosting operation in winter so as to stabilize always the blow temperature to the room 4.

Further, the system according to the present invention may be used simultaneously as an air conditioning system of air convection type and an air conditioning system of radiation type. Alternatively, the system according to the present invention may be used as a single system of an air conditioning system of air convection type or an air conditioning system of radiation type. Then, when the two air conditioning systems are appropriately used selectively depending on the season or the time of day, power usage and electricity charges are reduced.

The present invention has the above-mentioned configuration and hence has effects described below.

According to the present invention having the above-mentioned configuration, an air conditioning system of air convection type in which cool air or warm air having been blown into the chamber is blown into the room through the metal panel and an air conditioning system of radiation type in which heat storage is achieved by cooling or warming the latent heat storage member with cool air or warm air generated by the outdoor unit so that, by using the latent heat storage material as an auxiliary heat source, the metal panel is cooled or warmed into a somewhat higher temperature when the temperature of the cool air or the warm air is remarkably low and, in contrast, into a somewhat lower temperature when the temperature is remarkably high and then coolness or warmth from the metal panel is radiated into the room are provided and then the two air conditioning systems are used simultaneously or alternatively any one alone of the air conditioning systems is used so that air conditioning is effectively achieved in the room.

Further, when the latent heat storage material is used as an auxiliary heat source, the temperature difference at the time of air conditioning is reduced between the room temperature and the lowest blow temperature at cooling or the highest blow temperature at heating. This provides an air conditioning system avoiding discomfort that could be caused to the residents.

Then, the system according to the present invention may be used as an air conditioning system of air convection type and alternatively may be used as an air conditioning system of radiation type. Further, the two systems may be used simultaneously. Thus, when the two air conditioning systems are appropriately used selectively depending on the season or the time of day, power usage and electricity charges are reduced.

## Claims

1. A heat storage type radiation air conditioning system employing a heat pump air-conditioner, wherein one or a plurality of ceiling blow chamber boxes that are connected through a duct to an indoor unit installed in a room and linked to an outdoor unit of a heat pump air-conditioner through refrigerant piping and that are installed in a ceiling lower face are constructed such that a cover plate is fixed to and covers an upper opening part thereof and such that a metal panel provided with a large number of air flow holes punched and used for blow of cool or warm air and radiation of coolness or warmth is fixed to a lower opening part thereof, wherein a container material sealing and containing a latent heat storage material is installed inside the chamber box, and wherein an air conditioning system of air convection type in which cool air or warm air generated by the outdoor unit is blown through the indoor unit into the chamber box and then blown into the room through the large number of air flow holes of the metal panel and an air conditioning system of radiation type in which the metal panel is cooled or warmed by using as an auxiliary heat source the latent heat storage material having been cooled or warmed by heat storage achieved by cooling or warming the latent heat storage material with the cool air or the warm air from the outdoor unit and then coolness or warmth is radiated from the metal panel into the room are provided and then the two air conditioning systems simultaneously or alternatively any one alone of the air conditioning systems is allowed to be used.

2. A heat storage type radiation air conditioning system employing a heat pump air-conditioner, wherein the latent heat storage material according to CLAIM 1 is composed of polyethylene glycol or paraffin which is a compound whose phase transition is achievable and which has a latent heat storage property.

3. A heat storage type radiation air conditioning system employing a heat pump air-conditioner, wherein the container material according to CLAIM 1 is formed in in a bag shape by using an aluminum sheet, an aluminum film, polyethylene resin, polyethylene terephthalate resin, polyvinyl chloride, or nylon or alternatively is formed in a thin box shape by using a thin aluminum plate or polyethylene resin.

4. A heat storage type radiation air conditioning system employing a heat pump air-conditioner, wherein the chamber according to CLAIM 1 has a size of 5 to 10 times the volume of the container material.
